(19) Europäisches Patentamt
European Patent Office
Office européen des brevets

(11) Veröffentlichungsnummer: **0 201 100 B1**

# (12) EUROPÄISCHE PATENTSCHRIFT

(45) Veröffentlichungstag der Patentschrift: **13.03.91**

(51) Int. Cl.5: **C08G 63/20**, C08G 63/60, C08G 63/66, C09D 167/00, C09J 167/00

(21) Anmeldenummer: **86106289.1**

(22) Anmeldetag: **07.05.86**

## (54) Seitenketten enthaltende Polyester und deren Verwendung.

(30) Priorität: **07.05.85 DE 3516352**
**18.04.86 DE 3613083**

(43) Veröffentlichungstag der Anmeldung:
**12.11.86 Patentblatt 86/46**

(45) Bekanntmachung des Hinweises auf die Patenterteilung:
**13.03.91 Patentblatt 91/11**

(84) Benannte Vertragsstaaten:
**AT BE CH DE FR GB IT LI LU NL SE**

(56) Entgegenhaltungen:
**EP-A- 0 150 476**
**DE-A- 2 833 438**
**US-A- 4 147 737**
**US-A- 4 423 179**

(73) Patentinhaber: **HÜLS AKTIENGESELLSCHAFT**
**Paul-Baumann-Strasse 1**
**W-4370 Marl 1(DE)**

(72) Erfinder: **Müller, Hartmut, Dr.**
**Siebengebirgsallee 19**
**W-5210 Troisdorf(DE)**
Erfinder: **Huber, Hans, Dr.**
**Im Korresgarten 68**
**W-5204 Lohmar(DE)**
Erfinder: **Franzmann, Gieselher, Dr.**
**Markerbenhöhe 22**
**W-5810 Witten(DE)**
Erfinder: **Elmenthaler, Bernd**
**Hellerstrasse 56**
**W-4600 Dortmund(DE)**

EP 0 201 100 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyester, die über Ester- und/ oder Etherbrücken an die Hauptkette gebundene, unverzweigte und/oder verzweigte Alkylseitenketten enthalten und in Beschichtungen oder Klebstoffen einsetzbar sind.
Aus der US-PS 3,375,540 sind bei Raumtemperatur feste Polyester bekannt, die Alkyl- bzw. Alkylenseitenketten von substituiertem Bernsteinsäureanhydrid enthalten, wo rin die Seitenkette über ein Kohlenstoffatom mit der Hauptkette verbunden ist. Deren Schmelzpunkte liegen nur wenig niedriger als die von Polyestern ohne solche Alkylseitenketten.

Weitere Polyester enthalten Seitenketten, gebildet aus Resten von Dimer- und Trimerfettsäuren . Die sogenannten Dimerfettsäuren entstehen durch Kondensation ungesättigter Fettsäuren und enthalten stets auch Trimerfettsäure und monomere Fettsäuren. Die Struktur der Dimerfettsäure weist 2 Carboxylgruppen am Ende von Kohlenstoffketten und 2 weiterer Kohlenstoffketten an einem Cyclohexenring auf, wobei im Cyclohexenring und in einer Kette Doppelbindungen enthalten sind. Trimerfettsäuren entstehen durch Reaktion eines weiteren Moleküls ungesättigter Fettsäure mit der Doppelbindung des Cyclohexenringes und haben daher den Charakter stark verzweigter ungesättigter Tricarbonsäuren. Solche Polyester haben durch starke Verzweigung der Hauptkette wesentlich erhöhte Schmelzviskositäten und durch ungesättigte Gruppen eine unerwünschte Reaktivität und schlechte Licht- und Oxidationsbeständigkeit.

Beschichtung aus Aminoplastharzen und Polyurethanen mit Gehalten solcher Polyester nach der US-PS 4,423,179 und der DE-OS 34 01 559 können nur aus Lösung aufgebracht werden. Auch soweit nach dieser DE-OS Monocarbonsäuren mit verestert werden, ergeben sich durch starke Kettenverzweigung nicht niedrige Glaspunkte und Viskositäten. Auch die nach den DE-OS 24 41 921 und 25 07 985 hergestellten Polyester sind nicht niedrigschmelzend und erfordern Lösungsmittel bei der Verarbeitung, wobei eine enge Molekulargewichtsverteilung und starke Verzweigung der Polyester ebenso ungünstig sind wie der über die Herstellung von Carboxylpolyestern und Umsetzung mit Epoxialkoholen oder Alkylenoxiden erfolgende Herstellweg.

Die bekannten Polyester zur Herstellung von Beschichtungen und/oder Klebstoffen besitzen bei teilweise hohen Molekulargewichten zu hohe Schmelzviskositäten und zu hohe Glasumwandlungstemperaturen. Es ist daher nicht oder schwer möglich, diese Polyester oder daraus durch Umsetzung mit funktionalisierenden Verbindungen hergestellte vernetzbare Produkte, frei von Lösungsmitteln oder mit Wenig Lösungsmitteln zu verarbeiten.

Es bestand daher die Aufgabe, solche Polyester zu entwickeln, die nach einer Vernetzung, d.h. nach Umsetzung mit funktionalisierenden Verbindungen und der Vernetzung der so entstehenden Produkte, zu sehr elastischen Materialien führen und nach Möglichkeit lösungsmittelfrei oder lösungsmittelarm verarbeitet werden können.
Hierzu war es notwendig, den Erweichungspunkt gegenüber den dem bisherigen Stand der Technik entsprechenden Polyestern bei gleichzeitiger Erhaltung des Molekulargewichts soweit abzusenken, daß bei Raumtemperatur flüssige Polyester und flüssige funktionalisierte Polyester erhalten werden.

Gleichzeitig war nach Möglichkeit eine niedrige Glasumwandlungstemperatur anzustreben, um eine Versprödung der Beschichtungen und/oder Klebstoffe auch bei tiefen Temperaturen zu vermeiden.

Die niedrige Glasumwandlungstemperatur war nicht nur für Polyester mit Gehalten aliphatischer Dicarbonsäuren anzustreben, sondern auch für überwiegende Gehalte von aromatischen Polycarbonsäuren, welche als Stoffbestandteile vielfach zu bevorzugen sind, jedoch nach dem Stand der Technik niedrige Glasumwandlungstemperaturen nicht ermöglichen.

Es wurde nun gefunden, daß die Forderungen der gestellten Aufgabe überraschend sogar gleichzeitig erfüllt werden können, wenn aliphatische, d.h. vollständig oder ganz überwiegend gesättigte Seitenketten über Ester- oder Etherbindungen an die Hauptkette der Polyester gebunden sind.

Gegenstand der Erfindung sind daher bei Raumtemperatur flüssige Hydroxylpolyester mit OH-Zahlen von 10 bis 100 aus zwei- und mehrfunktionellen Ausgangsstoffen, gekennzeichnet durch über Ester- und/oder Etherbindungen von tri- oder höherfunktionellen Carbonsäuren und/oder Triolen oder höher funktionellen Polyolen und/oder Hydroxydicarbonsäuren entlang der Hauptkette der polyester und an der dritten und höheren Funktion gebundene geradkettige oder verzweigte Alkylseitenketten von 4 bis 36 C-Atomen, wobei das Molverhältnis von Estersegmenten der Hauptkette zu Alkylseitenketten 1,0 zu 0,02 bis 2,0 beträgt, mit Glasumwandlungspunkten kleiner als 0 ° C, vorzugsweise kleiner als -20 ° C,
Als Estersegment der Polyester wird dabei die sich wiederholende Gruppierung

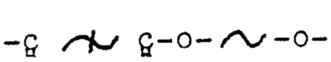

aus Di- oder Tricarbonsäure und ≁ als deren Kohlenwasserstoffrest und einem Di- oder Triol mit ≁ als deren Kohlenwasserstoffrest verstanden, wobei die Alkylseitenkette über eine dritte Carboxylgruppe der Tricarbonsäure oder eine dritte Hydroxylgruppe des Triols gebunden ist.

Die erfindungsgemäßen Polyester sind unvernetzt und weitgehend linear, d.h. aus unverzweigten Hauptketten mit nur vergleichsweise geringer, durch trifunktionelle Glieder der Hauptkette bedingter Kettenverzweigung, aufgebaut, obgleich Tricarbonsäuren bzw. höhere polycarbonsäuren und ggf. Triole bzw. höher funktionelle Polyole notwendig in dem Maße mit zu verwenden sind, wie Alkylseitenketten über Ester- und/oder Etherbindungen an die Hauptkette der Polyester zu binden sind.

Demgemäß weisen die neuen Polyester ganz oder überwiegend eine Art Kammstruktur - in vereinfacht gesehener ebener Projektion - auf bzw. eine Struktur, in der die Alkylseitenketten in möglichst regelmäßiger, statistischer Anordnung aus der im wesentlichen linearen und unverzweigten Hauptkette der Polyester herausragen.

In den erfindungsgemäßen Polyestern stammen die Alkylseitenketten aus Monocarbonsäureresten oder aus Monoalkanolresten, die an dritte Funktionen, d.h. Carboxylgruppen oder Etherbrücken von Tricarbonsäuren oder ggf.Tetracarbonsäuren, oder von Triolen oder ggf. Tetraolen in den Estersegmenten gebunden sind. Die Alkylseitenketten sind im wesentlichen gleichmäßig entlang der Hauptkette der Polyester gebunden, d.h. die Estersegmente der Hauptkette aus Di- bzw. Polycarbonsäuren, Di- bzw. Polyolen und Dihydroxy-mono- bzw. Hydroxydicarbonsäuren besitzen zumindest teilweise Carboxyl- oder Ethergruppen mit daran gebundenen Alkylresten der Monocarbonsäure bzw. Monoalkohole.

Es ist erfindungsgemäß erforderlich, daß im wesentlichen eine Funktionalität der polyesterbildenden Bestandteile von lediglich 2 oder wenig mehr in der Polyesterhauptkette vorliegt, d.h. daß lediglich 2 Carboxylgruppen der Polycarbonsäuren bzw. lediglich 2 Hydroxylgruppen der Polyole oder lediglich durchschnittlich 2 polyesterbildende Hydroxyl- bzw. Carboxylgruppen einer Hydroxypolycarbonsäure in der Hauptkette der Polyester gebunden sind, obgleich als Ausgangsstoffe Tricarbonsäuren bzw. höhere Polycarbonsäuren und Triole bzw. höhere Polyole zusätzlich zu Dicarbonsäuren und Diolen verwendet werden. Die dritte Carboxylgruppe der Tricarbonsäuren und dritte OH-Gruppe der Triole trägt durch Wahl der Ausgangsstoffe und Herstellbedingungen die genannte Alkylseitenkette.
Es ist daher erfindungsgemäß vorgesehen, vorzugsweise Alkylester von mindestens trifunktionellen Carbonsäuren, insbesondere Monoester von Tricarbonsäuren und Diester von Tetracarbonsäuren, jedoch auch Dialkylester von Tricarbonsäuren und ggf. Trialkylester von tetrafunktionellen Carbonsäuren bzw. aliphatische Monoester von Triolen und Diester von Tetraolen, jedoch auch Diester aliphatischer Carbonsäuren von Triolen und Triester aliphatischer Carbonsäuren von Tetraolen als Ausgangsstoffe neben den üblichen Dicarbonsäuren und Diolen bzw. Hydroxycarbonsäuren zu verwenden. Bevorzugt sind Glycidylester von Monocarbonsäuren und Mono- bis Trialkylester von Tricarbonsäuren, wobei bei der Polyesterbildung eine Alkylestergruppe der Monocarbonsäure im Polyester erhalten bleibt, während weitere Alkylestergruppen in üblicher Weise abgespalten werden. Weiter bevorzugt sind Trimethylolpropanester von Monocarbonsäuren. Erfindungsgemäß ist es jedoch in vielen Fällen auch möglich, anstelle von besonders Monoestern von Polycarbonsäuren bzw. Monocarbonsäureestern von Polyolen von den Einzelkomponenten Tri- und höhere Polycarbonsäuren plus Monoalkohol bzw. Triol oder höhere Polyole plus Monocarbonsäure auszugehen, selbst Kombinationen von Polycarbonsäure und Monocarbonsäure bzw. Polyol und Monoalkanol sind möglich. Diese Verfahrensweise ist nicht bevorzugt.

Erfindungsgemäß ist es entschieden bevorzugt, zum Aufbau der Alkylseitenketten verzweigte Alkohole in Form ihrer Ester oder als Einzelkomponente oder verzweigte Monocarbonsäuren als deren Ester oder als Einzelkomponente einzusetzen.

Als Ausgangsstoffe können bekannte aliphatische Di-, Tri und höhere Polycarbonsäuren, aromatische Di-, Tri- und Polycarbonsäuren, Dihydroxy-monocarbonsäuren und Hydroxydicarbonsäuren sowie Mono- und Dialkylester der genannten Di- und höher funktionellen Carbonsäuren, Mono-, bzw. Dicarbonsäureester von Diolen und höheren Polyolen bzw. Dimonocarbonsäureester und Mono- bzw. Dialkylester von Mono- bzw. Dihydroxymono- bzw. Dicarbonsäuren sowie die Mono- und Dialkylether von Diolen und höheren Polyolen sowie die Monocarbonsäuren und Monoalkanole selbst eingesetzt werden.

Zum Aufbau der Hauptkette der Polyester sind folgende zwei- und mehrfunktionelle, polyesterbildende Ausgangsstoffe bevorzugt:

als tri- und mehrfunktionelle Polycarbonsäuren, Trimellitsäure, Trimesinsäure, Hemellithsäure, Pyromellithsäure und deren polyesterbildende Derivate sowie sehr bevorzugt Trimellitsäureanhydrid und Trimellitsäuremonoalkylester sowie Trimellitsäure-dialkylester und -trialkylester.

als Dicarbonsäuren, z.B. Terephthalsäure, Hexahydrophthalsäure, Tetrahydrophthalsäure, Isophthalsäure, Phthalsäure und aliphatische Dicarbonsäuren mit 2 bis 12 Kohlenstoffatomen, wie z.B. Azelainsäure, Sebazinsäure, Dodekandisäure sowie deren polyesterbildende Derivate,

als Triole und mehrfunktionelle Polyole Glycerin, Pentaerythrit und sehr bevorzugt Trimethylolpropan, Trimethylolethan, Di-Trimethylolpropanether und deren Ester und Ether, Glycidylester von Monocarbonsäuren, besonders der sogenannten Versaticsäuren.

als Mono- bzw. Dihydroxycarbonsäure, z.B. Hydroxybernsteinsäure (Apfelsäure) und als Diole, aliphatische Diole mit 2 bis 6 Kohlenstoffatomen wie Monoethylenglykol oder Hexandiol sowie Etherdiole wie Diethylenglykol, Triethylenglykol bis zu Polyether-glykolen mit Mol-Gew. 1.000.

Zum Aufbau der Alkylseitenketten sind geradkettige oder verzweigte Alkanole oder aliphatische Monocarbonsäuren mit 4 bis 36, vorzugsweise 4 bis 18 Kohlenstoffatomen bzw. die Mono- oder ggf. Diester bzw. Mono- oder ggf. Diether der genannten drei- oder mehrfunktionellen Polyole, Polycarbonsäuren oder Hydroxycarbonsäuren geeignet.

Sehr bevorzugt sind verzweigtkettige Alkanole, insbesondere 2-Ethylhexanol oder ggf. tert.-Butanol sowie verzweigtkettige aliphatische Monocarbonsäuren wie 2-Ethylhexansäure, Isononansäure oder $\alpha,\alpha$-Dialkylmonocarbonsäuren in Form der Versaticsäuren, z.B. mit 9 bis 11 Kohlenstoffatomen.

Weiter sind entschieden gesättigte polyesterbildende Ausgangsstoffe bevorzugt, d.h. gesättigte Diole und Dicarbonsäuren, gesättigte Tricarbonsäureester oder ggf. Tricarbonsäure, gesättigte Triole und besonders Glycidylester oder ggf. Glycerin. Es können aber auch kleinere Anteile ungesättigter Ausgangsstoffe verwendet werden bis ca. 2 Mol-%, z.B. Maleinsäureanhydrid oder Fumarsäure.

Die erfindungsgemäße Aufgabe ist besonders vorteilhaft unter Verwendung von Trimellitsäure-tri-2-ethylhexylester lösbar. Weiterhin bevorzugt sind Trimethylolpropanmonoester, besonders der -mono-2-ethylhexylester.

In den erfindungsgemäßen Polyestern soll das Molverhältnis von Estersegmenten der Hauptkette zu Seitenketten 1 zu 0,02 bis 2,0 betragen. Als Estersegment der Hauptkette wird dabei der 2-wertige Rest aus einem Dicarbonsäurerest verbunden mit einem Diolrest verstanden, ohne Rücksicht darauf, ob dieses Estersegment weitere Carboxylgruppen oder Hydroxylgruppen trägt oder nicht trägt. Zwar wäre ein solches Molverhältnis von 1,0 zu 4,0 denkbar, doch sind Polyester, zumal lineare Polyester, aus einem Dialkanolester einer Tetracarbonsäure und dem Dialkanolester eines Tetraols nur schwer zu verwirklichen. Demgegenüber ist ein Polyester mit dem genannten Molverhältnis 1,0 zu 2,0 mit im Mittel einer Alkylseitenkette je Dicarbonsäurerest und einer Alkylseitenkette je Diolrest, beispielsweise aus Trimellitsäure-mono-2-ethylhexylester und Trimethylolpropan-mono-2-ethylhexansäureester durchaus herstellbar und sinnvoll. Molverhältnisse von Estersegmenten der Hauptkette zur Seitenkette von 1,0 zu 0,05 bis 1,0 sind bevorzugt. Die Polyester gemäß der Erfindung haben bemerkenswerte Eigenschaften.

Insbesondere wird eine Verzweigung der Polyesterketten weitgehend vermieden, so daß nicht nur die teilnehmenden Diole und Dicarbonsäuren, sondern alle Polyole durchschnittlich 2 Hydroxylgruppen zur Polyesterbildung zur Verfügung stellen, alle Polycarbonsäuren ebenfalls 2 Carboxylgruppen polyesterbildend in den Estersegmenten der Hauptkette enthalten haben und in Hydroxycarbonsäuren ebenfalls 2 der funktionellen Gruppen zur Bildung von Estersegmenten der Hauptkette beitragen. Eine geringfügige Kettenverzweigung der Polyesterketten ist jedoch nicht vermeidbar und kann toleriert werden.

In den erfindungsgemäßen Polyestern liegen die Glastemperaturen vorzugsweise unter 0° C, sehr bevorzugt unter minus 20° C.

Gleichzeitig haben die Polyester eine breite Molgewichtsverteilung und Molekulargewichte von etwa 1.000 bis etwa 10.000 oder mehr, wobei 2.000 bis 5.000 bevorzugt ist. Die OH-Zahl liegt zwischen 10 bis 100, vorzugsweise 20-60 mg KOH/g. Die Polyester sind bei 20° C flüssig. Die Glastemperaturen liegen unter minus 10° C, überwiegend sogar wesentlich darunter. Die Viskositäten in (Pa.s) bei 20° C liegen zwischen 70 und ca. 5.000.

Die neuen Seitenketten-Polyester haben die besondere Eigenschaft, daß bei nur geringer Erhöhung der Temperatur ein wesentliches Absinken der Viskosität erfolgt. Damit ist die Aufgabe gelöst, Polyester zur Verfügung zu stellen, deren Verarbeitung lösungsmittelfrei erfolgen kann.

Aufgrund ihrer Struktur sind die erfindungsgemäßen Polyester amorph.

Sehr bemerkenswert ist, daß die genannte Aufgabe nicht nur mit aliphatischen Dicarbonsäurekomponenten oder aliphatischen Polycarbonsäurekomponenten, sondern mit aromatischen Dicarbonsäure- und Polycarbonsäurekomponenten, sogar mit ausschließlichem Anteil von aromatischen Polycarbonsäuren gelöst werden kann, obgleich ein Polyester aus beispielsweise Terephthalsäure und Ethylenglykol bei 100° C fest ist und eine Glastemperatur von 73° C aufweist, die auch durch eine Verwendung einer Mischung aromatischer Dicarbonsäuren nicht wesentlich gesenkt werden kann.

Nach dem Stand der Technik mußten Polyester mit tiefen Glasumwandlungstemperaturen einen hohen Anteil aliphatischer Dicarbonsäure oder Diole aufweisen, wodurch ihre Haftung zu polaren Oberflächen bei Verwendung als Klebstoff, besonders zu Metallen, sehr gering ist.

Die erfindungsgemäßen Polyester besitzen auch bei sehr hohen Anteilen aromatischer Bausteine

gleichzeitig niedrige Schmelzviskosität und tiefe Glasumwandlungstemperaturen und weisen eine ausgezeichnete Haftung zu Metall auf.

Die Glasumwandlungstemperatur der beschriebenen Polyester liegt bei gleichen Anteilen an aromatischen Dicarbonsäuren wesentlich tiefer als die der bekannten Polyester.

Die Glasumwandlungstemperatur sinkt mit höherem Mol-Gehalt von Alkylseitenketten und mit zunehmender Länge der Alkylseitenketten.
Beispiel hierfür zeigt Tabelle 1. Auf die Eigenschaften ist es jedoch von geringem Einfluß, ob die Alkylseitenkette an die Dicarbonsäurekomponente oder die Diolkomponente der Estersegmente gebunden ist und ob die Bindung durch eine Etherbrücke oder eine Estergruppe erfolgt.

Die wesentlich erniedrigte Schmelzviskosität der erfindungsgemäßen Polyester ist von besonderer Bedeutung für die lösungsmittelarme oder lösungsmittelfreie Verarbeitung, wobei die Erniedrigung der Viskosität durch die Anzahl und die Länge der Seitenketten eingestellt werden kann. Der Zusatz von Weichmachern oder Reaktivverdünnern kann daher entfallen, anders als bei bekannten Polyestern.

Für die Verwendung der erfindungsgemäßen Polyester ist insbesondere ihr Charakter als Hydroxylpolyester maßgebend, wodurch eine Umsetzung mit reaktiven oder vernetzbaren Verbindungen, wie Isocyanaten, Melamin- oder Benzoguanaminharzen, Epoxiden, Silanestern o. dgl. vorgesehen ist, durch welche die erfindungsgemäßen Polyester vernetzbar werden. Weiterhin kann eine Umsetzung der Hydroxypolyester mit Carbonsäureanhydriden und anschließende Vernetzung mit Epoxiden oder Polyoxazolinen und die Peroxid- oder Strahlenhärtung nach Funktionalisierung mit ungesättigten Gruppen erfolgen.

Durch die Eigenschaften der erfindungsgemäßen Polyester werden Beschichtungen oder Klebstoffe elastischer und kältebeständiger. Als Reaktivkleber sind funktionalisierte Produkte aus den erfindungsgemäßen Polyestern, besonders für den Verbund von Materialien gleicher oder unterschiedlicher Qualität, wie etwa Metalle, Kunststoffe, Glas, Keramik, Leder u.a. einsetzbar, wobei für den Auftrag geringere Temperaturen nötig sind. Die ausgehärteten Massen weisen eine sehr gute Elastizität bei zugleich guter Festigkeit auf.
Als Flüssigpolyester eignen sich die beschriebenen Polyester aufgrund ihrer tiefen Glasumwandlungstemperaturen besonders für Kaschier- und Haftklebeanwendungen, wobei speziell an polaren Substraten eine bessere Haftung erreicht wird als mit bekannten Flüssigestern. Der Grad der Klebrigkeit ist weiterhin durch Art und Menge der Alkylseitenketten beeinflußbar.
Zusätze von klebrig machenden Harzen, Pigmenten, Alterungsschutzmitteln, Füllstoffen wie Silica, Kreide u.a. sind möglich.
Zur Herstellung der erfindungsgemäßen Polyester können im wesentlichen zwei Wege beschritten werden.
Die Monocarbonsäuren und Monoalkanole können (vor der Polyesterbildung)mit tri- oder mehrfunktionellen Dicarbonsäuren oder deren Anhydriden oder deren esterbildenden Derivaten, insbesondere den Methylestern bzw. den tri- oder mehrfunktionellen Polyolen, zu Monoestern oder ggf. Diestern oder den Monoethern oder ggf. Diethern umgesetzt werden. Diese Verfahrensweise ist insbesondere bei den schwerveresternden Versaticsäuren und ggf. auch bei verzweigten Alkoholen wie 2-Ethylhexanol ratsam. Der Einbau von Versaticsäuren ist durch Verwendung der entsprechenden handelsüblichen Glycidylester möglich, wobei vorzugsweise zunächst mit einer Dicarbonsäure, beispielsweise einer aliphatischen Dicarbonsäure und im zweiten Schritt mit aromatischen Dicarbonsäureanhydriden umgesetzt wird, worauf weitere Polyesterrohstoffe zugegeben werden können.

Zum anderen können Monocarbonsäuren und/oder Monoalkanole bei der Veresterung und Polyesterbildung anwesend sein, wobei auch ein Überschuß der monofunktionellen seitenkettenbildenden Verbindungen möglich und zweckmäßig ist. Die Umesterung und Polyesterbildung kann durch Katalysatoren gefördert werden. Weiterhin kann die statistische Verteilung durch ggf. gesenkte Veresterungstemperaturen und erhöhte Veresterungszeit gefördert werden. Im allgemeinen liegen die Temperaturen bei der Veresterung und Polyesterbildung bei 180 bis 260° C, vorzugsweise 200 bis 240° C.
Am Ende der Polykondensation wird vorzugsweise der Druck auf 10 bis 20 mbar gesenkt.
Verzweigte Alkylgruppen, besonders in vorgebildeten Estern der Tricarbonsäurealkylester und Glycidylversaticsäureester werden bei der Polykondensation erfindungsgemäß praktisch nicht abgespalten. Es ist möglich, aber nicht bevorzugt,Monoalkanole zusammen mit Tricarbonsäuren oder Triole und aliphatische Monocarbonsäuren zusammen mit Triolen bei der Polykondensation einzusetzen und so die Alkylseitenketten während der Polykondensation zu bilden.

Es ist aber entschieden vorzuziehen, entsprechende Monoester oder Monoether oder die Di- und Triester vorzubilden, bei denen alle monofunktionellen Alkylseitengruppen bis auf eine pro Mol abgespalten werden.

Trimethylolpropan ist besonders in Form seiner Mono- bis Triester bevorzugt.

Erfindungsgemäß ist es in den neuen Seitenkettenpolyestern bevorzugt, daß von 90 % oder mehr der Estersegmente keine konventionellen Zweigketten aus Polyestersegmenten ausgehen.

Bei der Herstellung der Polyester ist überprüfbar, daß die Alkylreste von an der dritten Funktion von Tricarbonsäuren gebundenen Monoalkoholen und an die dritte Funktion von Triolen gebundenen Monocarbonsäuren nicht abgespalten werden und in den Hydroxylpolyestern erhalten sind, was auf einfache Weise durch Analyse des Destillats von Veresterung und Polykondensation geschehen kann.

Es wird ein Überschuß von Diolen plus Triolen bzw. deren Estern oder Derivaten eingesetzt gegenüber Dicarbonsäuren plus Tricarbonsäuren bzw. deren Estern oder Derivaten und mit Fortschreiten der Polykondensation der Überschuß des Diols entfernt, bis Hydroxylzahlen von 10 bis 100 und Säurezahlen (SZ) unter 5, vorzugsweise unter 3, sehr bevorzugt unter 1, erreicht sind.

Bei der Entfernung der letzten Mengen von überschüssigem Diol und Absenkung der OH-Zahlen auf den Endwert darf nicht Vernetzung durch Abspaltung von Alkylseitenketten eintreten, die sich durch Stehenbleiben des Rührers einem schnellen Anstieg der Viskosität um mindestens eine Zehnerpotenz und Entstehen einer zähelastischen Masse anzeigt. Ein solcher verdorbener Ansatz ist in gleicher Weise zu wiederholen, wobei aber eine um 5 höhere OH-Zahl als die zuletzt gemessene des verdorbenen Ansatzes die endgültige OH-Zahl ist oder ggf. die letzte Temperatur der Polykondensation um 10° C zu senken ist bzw. der Druck auf 40 bis 50 mbar zu erhöhen ist.

Ein weiterer Weg ist der Einsatz von Tricarbonsäuretrialkylestern (vgl. Beispiel 1) anstelle gleicher Molmengen der Monoester oder des Esters nach Beispiel Ib). Trimethylolpropan-monoester (Beispiel Ia) und besonders Glycidylester, insbesondere die aller Versaticsäuren, erwiesen sich als sehr stabil.

Gemäß Anspruch 13 erfolgt daher die Herstellung der erfindungsgemäßen Hydroxylpolyester mit Alkylseitenketten durch ein

Verfahren zur Herstellung von Polyestern mit OH-Zahlen von 10 bis 100 aus zwei- und mehrfunktionellen Ausgangsstoffen, wobei im Überschuß bei der Polyesterbildung vorhandene Diole im Laufe der Polyesterbildung entfernt werden nach mindestens einem der Ansprüche 1 bis 12, dadurch gekennzeichnet, daß als difunktionelle polyesterbildende Bestandteile aliphatische Diole und aliphatische, cycloaliphatische oder aromatische Dicarbonsäuren, als trifunktionelle Bestandteile, Tri- oder Polycarbonsäuren, Tri- oder Polyole oder Hydroxycarbonsäuren, deren polyesterbildende Derivate und Monoalkanole und/oder aliphatische Monocarbonsäuren als freie Verbindung oder als Ester bzw. Ether der trifunktionellen polyesterbildenden Bestandteile eingesetzt werden, wobei mindestens je dritte oder höhere Carboxyl- oder Hydroxylfunktion der trifunktionellen polyesterbildenden Bestandteile ein oder mehr Mole Monoalkanol oder aliphatische Monocarbonsäure als freie Verbindung oder Ester bzw. Ether vorhanden sind und zu Polyestern umgesetzt werden.

Die Bestimmung des Glaspunktes (Tg) wurde mit einem Differentialkalorimeter, Mod. DSC 1 der Fa. Perkin-Elmer, durchgeführt.

Die Endgruppenkonzentration wird durch die Säurezahl SZ, Hydroxylzahl OHZ, beide in mg KOH/g bzw. die Carboxylzahl (C) in mVal.COOH/kg Polymer nach H. Pohl, Analytic. Chem. 26 (1954), 1614, gemessen.

Die angegebenen Molekulargewichte sind durchschnittliche Molekulargewichte (M) aufgrund von Messungen der Gelpermeations-chromatographie (GPC) und Abschätzung aufgrund der enthaltenen Peaks, die Schwerpunkte der enthaltenen Molekulargewichte anzeigen, bzw. mittlere Molekulargewichte (M), berechnet aus der OH-Zahl.

Besonders bevorzugt ist die Verwendung der neuen Polyester als Haftklebstoffe, nachdem 10 bis 90 % der Hydroxylgruppen durch Methacrylgruppen oder Acrylgruppen ersetzt worden sind durch Vernetzung mit Elektronenstrahlen oder UV-Strahlen. Im Falle von UV-Strahlen wird ein Photosensibilisator, beispielsweise nach Polymers Paint Colour Journal, Vol. 175 (April 1985), Seiten 247 bis 250, in Mengen von 1 % vor der Vernetzung zugesetzt. Die Polyester können gemäß den mit F bezeichneten Beispielen mit an sich beliebigen Acrylverbindungen und Methacrylverbindungen umgesetzt werden, die eine weitere, mit Hydroxylgruppen reaktionsfähige Gruppe, wie die Isocyanatgruppe, eine Ethergruppe oder eine Glycidylgruppe enthalten, wobei im Falle von Glycidylacrylaten und Methacrylaten zunächst durch Umsetzung mit Dicarbonsäureanhydrid ein Carboxylpolyester herzustellen ist.

Als Haftklebstoffe werden dabei flächige Beschichtungen auf Papier, Kunststoff o.dgl. verstanden, welche die besondere Eigenschaft der Dauerklebrigkeit aufweisen.

Für diese bevorzugte Verwendung sind besonders die beanspruchten Polyester geeignet, da auf diese Weise Haftklebstoffe herstellbar sind, die nicht Lösungs- oder Verdünnungsmittel enthalten, welche bei der Vernetzung stören.

Beispiel 1

In einem Reaktor mit aufgesetzter Kolonne, Kontroll- sowie Kontaktthermometer wird unter Rühren und Stickstoffatmosphäre aus 464 g (2,417 Mol) Trimellitsäureanhydrid und 990 g (7.615 Mol) 2-Ethylhexanol der Triester mit 0,75 g Octylenglykoltitanat als Katalysator durch Veresterung bei 160 bis 210° C in 5 Stunden unter Einhaltung einer Kolonnenkopftemperatur von ca. 102° C hergestellt. Wenn eine Säurezahl von < 3 mg KOH/g erreicht ist, werden 333 g (3.142 Mol) Diethylenglykol zugegeben und die Kolonne geschlossen. Nach Umstellen auf eine Destillationsbrücke wird umgeestert und bei 200 bis 230° C 2-Ethylhexanol so abdestilliert, daß die Brüdentemperatur 165° C nicht überschreitet. Wenn die Brüdentemperatur bei einer Innentemperatur von 230° C auf < 100° C fällt, wird Vakuum angelegt (800 mbar fallend auf 300 mbar), so daß die Brüdentemperatur im Bereich 100 bis 165° C liegt. So wird umgeestert, bis die Endkennzahlen erreicht sind. Dann wird das Vakuum mit Stickstoff aufgehoben und das Produkt gekühlt.

| Kenndaten: | SZ | ∠ 0,2 mg KOH/g | $\bar{M}$ = 4.000-5.000 |
|---|---|---|---|
| | OHZ | 40,0 mg KOH/g | |
| | $V_{20}$ | 88 Pa.s | |
| | $T_g$ | - 38°C | |

Es wurden dabei im Destillat des Ansatzes 676 g 2-Ethylhexanol und 84 g Diethylenglykol gefunden. Im hergestellten Produkt errechnet sich daraus, daß 1 Mol 2-Ethylenhexanol je Mol Trimellitsäure gebunden und als Alkylseitenkette enthalten ist, was sich durch Analysen bestätigt. Das Verhältnis von Estersegmenten zu Alkylseitenketten ist 1 : 1 Mol.

Bei Folgeansätzen dieses Alkylseitenketten-Polyesters kann das Destillat als Quelle für 2-Ethylhexanol eingesetzt werden, wobei bei der Polyesterbildung die Menge Diethylenglykol entsprechend der schon zugesetzten Menge vermindert wird.

## Beispiel 2

13,57 kg Glycidylester der Versaticsäure 10(Cardura(R)E10+ der Shell) 2 wurden in einem Reaktor mit aufgesetzter Kolonne, Kontroll- sowie Kontaktthermometer unter Rühren und Stickstoffatmosphäre auf 110° C erwärmt. Zum Glycidylester wurden dann 4,35 kg Adipinsäure und 67 g DYNAPOL A 1 $V^{(R)}$ (1) zugegeben. Die Glycidyladipatbildung fand unter schwacher Wärmetönung statt, die eine Temperatursteigerung auf 140° C zur Folge hatte. Die Temperatur von 140° C wurde 30 min. gehalten. Danach erfolgte die Zugabe von 8,81 kg Phthalsäureanhydrid und 5,52 kg Diethylenglykol. Der Reaktorinhalt wurde in 1 Std. 30 min. auf 235° C geheizt. Nach 5 Std. bei 235° C wurden 22 g Octylenglykoltitanat zugegeben und ein Vakuum von 150 mbar angelegt. Der Druck wurde innerhalb von 2 Std. 30 min. bis auf 10 mbar, danach weiter auf 5 mbar gesenkt. Nach 4 Std. unter diesen Bedingungen wurde die Kondensation durch Brechen des Vakuums und Kühlen des Produktes beendet. Das Produkt hatte eine SZ < 1 mg KOH/g und eine OHZ von 40 mg KOH/g sowie eine Viskosität $V_{20}$ = 4.350 Pa.s.

Die Glasumwandlungstemperatur liegt bei -15° C.

M = 2.800 bis 3.800

Im Destillat wurde nur der Überschuß des Diethylenglykols gefunden, aber praktisch keine Versaticsäure. Dementsprechend ist der Rest der Versaticsäure als Alkylseitenkette an den Glycerinrest des Polyesters gebunden, was durch Analysen bestätigt wurde. Das Verhältnis von Estersegmenten zu Alkylseitenketten beträgt 1 : 0,53 Mol.

## Beispiel 3

2) Glycidylester der Versaticsäure der Gesamtkohlenstoffanzahl 10 mit, '-Kettenverzweigung durch überwiegend Methylgruppen mit einem kleineren Anteil Ethylgruppen.

1) Addukt aus phosphoriger Säure und 3 Mol Glycidylester der Versaticsäure 10 (Cardura (R) 10 der Shell) nach EP-A, 0 117 912, als Schutz vor oxidativem Abbau.

In einem Reaktor mit aufgesetzter Kolonne, Kontroll- sowie Kontaktthermometer werden unter Rühren und Stickstoffatmosphäre bei gleichzeitigem Aufheizen chargiert: 13,42 kg Trimethylolpropan/2-Ethylhexansäure-monoester (Beispiel Ia), 1,88 kg Monoethylenglykol, 5,00 kg Hexandiol-1,6, 7,37 kg Adipinsäure, 8,38 kg Isophthalsäure und 45 g DYNAPOL A 1 V.[(R)] 2) .
Bei ca. 140° C beginnt die Wasserabspaltung, die unter Kontrolle der Kolonnenkopftemperatur (ca. 105° C) durchgeführt wird.
Nach 2 bis 3 Stunden ist die Endtemperatur von 240° C erreicht. Nach 5 bis 6 Stunden sind 3,70 kg Destillat angefallen.

Es werden 15 g Octylenglykoltitanat zugegeben und Vakuum angelegt. Nach ca. 3 Std. bei Druckverminderung auf bis zu 10 mbar sind die Endkennzahlen erreicht. Das Vakuum wird mit Stickstoff aufgehoben und das Produkt gekühlt.

| | | | |
|---|---|---|---|
| Kenndaten: | SZ | 1 mg KOH/g | $\bar{M}$ = 3.200 - 4.800 |
| | OHZ | 33 mg KOH/g | |
| | $V_{20}$ | 948 Pa.s | |
| | $T_g$ | -34°C | |

Im Destillat findet sich der Überschuß des Ethylenglykols jedoch praktisch nicht Hexandiol und 2-Ethylhexansäure. Dementsprechend findet sich der Rest der 2-Ethylhexansäure als Alkylseitenkette an den Trimethylolpropanrest im Polyester gebunden, was durch Analysen-bestätigt wird. Das Verhältnis der Estersegmente zu Alkylseitenketten beträgt 1 : 0,40 Mol.

Beispiele 4 bis 11 sowie Vergleichsbeispiele A bis C

Beispiel 11 wird wie folgt durchgeführt:
50,6 g Monoethylenglykol (0,817 mol) und 0,122 g Butyltitanatlösung 36,8 %ig in 2-Ethylhexandiol-1,3 wurden mit 97,0 g Monoester der 2-Ethylhexansäure des Trimethylolpropans(0,35 Mol)in einem Rundkolben mit aufgesetzter Kolonne, Thermometer und Rührer unter Stickstoffatmosphäre erwärmt. Bei ca. 80° C erfolgte die Zugabe von 136 g Dicarbonsäuregemisch ($C_4$-$C_6$) (1 Mol). In 30 Minuten wurde die Temperatur auf 150° C, bei beginnender Reaktionswasserabspaltung, gesteigert. Nach 4 Stunden wurden 240° C erreicht bei einer SZ von 14,5 mg KOH/g. Nach weiteren 60 Minuten betrug die SZ 14,0 mg KOH/g. Es wurde ein Vakuum von 100 mbar angelegt und auf 20 mbar gesenkt. Nach 3 Stunden wurde durch Brechen des Vakuums und Kühlen des Produktes die Kondensation beendet.
Das Produkt hatte eine SZ von 1,4 mg KOH/g und eine OHZ von 40 mg KOH/g und eine Glastemperatur von unter -20° C.

Die Beispiele 4 bis 10 und die Vergleichsbeispiele A bis C werden aus den in der Tabelle 1 enthaltenen Bestandteilen in den genannten Molverhältnissen und gleichen Bedingungen wie in Beispiel 11 hergestellt, wobei der gleiche Überschuß von Ethylenglykol verwendet wird. Die Polykondensation wird bei einer Säurezahl unter 2 bei Erreichen der OH-Zahl von 40 abgebrochen. Die Molgewichte (M) liegen zwischen 2.600 und 3.500.

Beispiel Ia

Darstellung des Monoesters aus 2-Ethylhexansäure und Trimethylolpropan
165,6 g 2-Ethylhexansäure (1,15 Mol) wurden in einem Rundkolben mit aufgesetzter Kolonne, Thermometer und Rührer unter Stickstoffatmosphäre erwärmt und 134,0 g Trimethylolpropan (1,0 Mol) sowie 0,86 g Ester der phosphorigen Säure ($H_3PO_3$) hergestellt aus Versaticsäureglycidylester und $H_3PO_3$ und 0,137 g Butyltitanatlösung 36,8 %ig zugegeben. Nach 60 Minuten wurden 185° C erreicht, bei beginnender Abspaltung des Reaktionswassers.

Nun wurde die Reaktionstemperatur auf 255° C gesteigert. Nachdem 93,6 % Reaktionswasser

2) wie in Beispiel 2

abdestilliert war, wurde die aufgesetzte Kolonne entfernt und auf den unteren Weg umgestellt. Bei Erreichen einer SZ von ca. 6,2 mg KOH/g wurde durch Kühlen des Produktes die Kondensation beendet. Im Produkt sind 1,0 Mol 2-Ethylhexansäure je Mol Trimethylolpropan enthalten.

Beispiel Ib

Trimellitsäure-2-ethylhexylester

In einen 1 l-Rundkolben werden 193 g (1 Mol) Trimellitsäureanhydrid und 234 g (1,8 Mol) 2-Ethylhexanol sowie 0,2 g Octylenglykoltitanat vorgelegt. Unter $N_2$-Einleitung und Rühren wird auf 150° C erhitzt, wobei die Wasserabspaltung beginnt. Innerhalb 4 Stunden wird die Temperatur auf 220° C gesteigert, das Destillat wird mittels einer Vigreux-Kolonne getrennt, die Kopftemperatur beträgt hierbei 100 bis 105° C. Die Badtemperatur wird so lange gehalten, bis die Kopftemperatur unter 80° C fällt. Das Produkt besitzt eine Säurezahl von 150 ± 10 mg KOH/g. Im Produkt sind 1,7 Mol 2-Ethylhexanol je Mol Trimellitsäure enthalten.

T A B E L L E 1

Molverhältnisse und Eigenschaften der hergestellten Polyester

| Beispiel | IS | TPS | PS | DCS | AS | TTE | MEG | DEG | HD | GV | TMME | Glas-temp. (°C) | Visk. Pa.s 20°C |
|---|---|---|---|---|---|---|---|---|---|---|---|---|---|
| 1 | -- | -- | -- | -- | -- | 100$^{x}$ | -- | 100 | -- | -- | -- | -38 | 80 |
| 2 | -- | -- | 67 | -- | 33 | -- | -- | 47 | -- | 53$^{xx}$ | -- | -15 | 4.350 |
| 3 | 50 | -- | -- | -- | 50 | -- | 25 | -- | 35 | -- | 40$^{x}$ | -34 | 950 |
| 4 | -- | 25 | 25 | -- | -- | 50$^{xxx}$ | 100 | -- | -- | -- | -- | -10 | 3.100 |
| 5 | -- | -- | -- | -- | -- | 100$^{xxx}$ | 100 | -- | -- | -- | -- | -53 | 1.200 |
| 6 | -- | 20 | 20 | 60 | -- | -- | 70 | -- | -- | -- | 30$^{x}$ | -22 | 1.800 |
| 7 | -- | 20 | 20 | 60 | -- | -- | 70 | -- | -- | -- | 30$^{x3}$ | -30 | 1.900 |
| 8 | -- | 10 | 10 | 60 | -- | 20$^{xxx}$ | 100 | -- | -- | -- | -- | -23 | 2.000 |
| 9 | -- | 10 | 10 | 60 | -- | 20$^{x2}$ | 100 | -- | -- | -- | -- | -26 | 1.700 |
| 10 | -- | -- | -- | 60 | -- | 40$^{xxx}$ | 100 | -- | -- | -- | -- | -31 | 300 |
| 11 | -- | -- | -- | 100 | -- | -- | 70 | -- | -- | -- | 30$^{x}$ | -41 | 130 |
| A | -- | 50 | 50 | -- | -- | -- | 100 | -- | -- | -- | -- | +55 | fest |
| B | -- | 20 | 20 | 60 | -- | -- | 100 | -- | -- | -- | -- | -12 | 2.300 |
| C | -- | -- | -- | 100 | -- | -- | 100 | -- | -- | -- | -- | -35 | 140 |

Zu Tabelle 1:

PS = Phthalsäure
TPS = Terephthalsäure
AS = Adipinsäure
IS = Isophthalsäure
DCS = aliphatische Dicarbonsäure von $C_4$ bis $C_6$ - Gesamtkohlenstoff (Gemisch gleicher Teile)
MEG = (Mono-)Ethylenglykol
DEG = Diethylenglykol
HD = Hexandiol-1,6
TTE = Trimellitsäure-alkylester
GV = Glycidylester der Versaticsäure 10
TMME = Trimethylolpropan-monoester

x = Tri-2-Ethylhexylester
xx = Versaticsäure-10-ester
xxx = Mono-2-Ethylhexylester
x2 = Monolaurylester
x3 = Kokosfettsäureester

Beispiel 12 bis 15

Beispiel 2 wird wiederholt, wobei jedoch die Menge des Glycidylesters variiert wird, nämlich auf 2 (Beispiel 12), 20 (Beispiel 13), 40 (Beispiel 14) und 70 (Beispiel 15), wodurch 98 Mol-% Diethylenglykol in Beispiel 12 und in den folgenden 80, 60 und 30 Mol-% Diethylenglykol im Produkt enthalten sind und ein dem Beispiel 2 entsprechender Überschuß Diethylenglykol im Ansatz verwendet wird.
Mit steigendem Gehalt von Glycidylestern sinkt die Glastemperatur Tg und die Viskosität.

Beispiele 16 bis 18

Beispiel 3 wird wiederholt, wobei jedoch im Produkt 5 Mol-% (Beispiel 16), 20 Mol-% (Beispiel 17) und 50 Mol-% Trimethylolpropan-mono-2-ethylhexylester (Beispiel 18) und entsprechend 60 Mol-% (Beispiel 16), 45 Mol-% (Beispiel 16) und 15 Mol-% (Beispiel 17) MEG bei gleichen Anteilen von 35 Mol-% Hexandiol-1,6 und jeweils 50 Mol-% Isophthalsäure und 50 Mol-% Adipinsäure enthalten ist. Im Ansatz wird ein Überschuß MEG zugesetzt und mit Fortschreiten der Polykondensation entfernt. Die Produkte haben eine OHZ von 40.

Beispiel 19

| | |
|---|---|
| Polyester mit Alkylseitenketten | |
| aus Adipinsäure | 60 Mol-% |
| Phthalsäureanhydrid | 40 Mol-% |
| Cardura E 10^R | 33 Mol-% |
| Hexandiol-1,6 | 55 Mol-% |
| Neopentylglykol | 12 Mol-% |

Entsprechend der Verfahrensweise von Beispiel 2 wurde ein Alkylseitenkettenpolyester hergestellt aus folgenden Ausgangsstoffen:
Glycidylester von Versaticsäure E10 (Cardura (R)E10) = 8,89 kg; Hexandiol-1,6 = 7,66 kg; Neopentylglykol = 1,48 kg und den Säurekomponenten Adipinsäure = 8,94 kg; Phthalsäureanhydrid = 6,04 kg sowie Dynapol A1V(R)(vgl. Beispiel 2) = 67 g; Octylenglykoltitanat = 22,5 g.
Kennzahl SZ <1, OHZ = 30, $V_{20}$ = 795 Pa.s, TG = -31 °C

Beispiel 20

| | |
|---|---|
| Polyester mit Alkylseitenketten der Zusammensetzung | |
| Adipinsäure | 40 Mol-% |
| Phthalsäureanhydrid | 40 Mol-% |
| Isophthalsäure | 20 Mol-% |
| Cardura R E10 | 33 Mol-% |
| Hexandiol-1,6 | 50 Mol-% |
| Neopentylglykol | 17 Mol-% |

Entsprechend der Verfahrensweise von Beispiel 2 wurde der Polyester aus folgendem Ausgangsstoff hergestellt: Gylcidylester von Versaticsäure 10 (Cardura^R E10) = 8,78kg; Hexandiol-1,6 = 6,89 kg; Neopentylglykol = 2,07 kg; Adipinsäure = 5,89 kg; Phthalsäureanhydrid = 5,97 kg; Isophthalsäure = 3,35 kg sowie Dynapol A1V(R) = 67 g und Octylenglykoltitanat = 22,5 g.
Der erhaltene Polyester hatte die Kennzahlen: Säurezahl unter 1, OHZ = 38, $V_{20}$ = 2.610 Pa.s, TG = -22 °C.

Beispiel 21

| | |
|---|---|
| Polyester mit Alkylseitenketten der Zusammensetzung | |
| Adipinsäure | 100 Mol-% |
| Hexandiol-1,6 | 35 Mol-% |
| Monoethylenglykol | 25 Mol-% |
| Trimethylolpropan-monoester der Ethylhexylsäure | 40 Mol-% |

Entsprechend der Verfahrensweise von Beispiel 2 wurde ein Polyester hergestellt aus den Ausgangsstoffen: Adipinsäure = 15,19 kg; Hexandiol-1,6 = 4,97 kg; Monoethylenglykol = 1,87 kg; Trimethylolpropan-mono-ethylhexylester (vgl. Beispiel Ia) = 13,40 kg sowie Dynapol A1V(R) = 30 g und

Octylenglykoltitanat = 15 g. Kennzahlen:SZ unter 1, OHZ = 24, $V_{20}$ = 70,8 Pa.s,TG =-50° C

Beispiele für Funktionalisierung mit Acrylaten

Beispiel II a

Herstellung des IPDI/HEA - 1:1 - Adduktes

Rohstoffe für 100 kg:

| | |
|---|---|
| Isophorondiisocyanat (IPDI) | 65,68 kg |
| 2-Hydroxyethylacrylat(HEA) | 34,32 kg |
| Dibutylzinndilaurat (DBTL) | 50 g |
| Polymerisationsinhibitor (2,6-Di-tert.-butyl-4-methylphenol) | 50 g |

In einem Reaktor werden IPDI, DBTL und der Polymerisationsinhibitor vorgelegt und auf 40° C erwärmt. HEA wird unter Rühren während 3 Std. gleichmäßig zudosiert. Sobald durch exotherme Reaktion die Temperatur auf 60° C ansteigt, wird gekühlt, so daß die Temperatur 80° C nicht übersteigt, jedoch 50° C nicht unterschritten werden. Nach beendeter HEA-Zugabe wird so lange der Reaktorinhalt auf 60° C gehalten, bis der NCO-Gehalt auf 12,2 %(nach 2 Std.)gesunken ist. Viskosität von 8.000 bis 12.000mPa.s bei 20° C. Das Produkt kann für kurze Zeit an der offenen Luft gehandhabt werden, muß jedoch bei längerer Aufbewahrung gegen Luftfeuchtigkeit in geschlossenen Fässern geschützt werden.

Funktionalisierung von Polyestern durch Acrylierung

Beispiel F1

Der Polyester nach Beispiel 2 wird direkt nach der Herstellung auf 120° C abgekühlt und das Vakuum auf 400 mbar eingestellt bzw. ein fertiger Polyester nach Beispiel 2 wird auf 120° C bei einem Vakuum von 400 mbar erwärmt. Unter Rühren werden je 100 kg des Polyesters nach Beispiel 2 12,5 kg des Addukts nach Beispiel IIa zugegeben und 1 Std. gerührt bis der NCO-Gehalt auf unter 0,2 % abgesunken ist.

Durch diese Reaktion wurden die Hydroxylgruppen des Polyesters nach Beispiel 2 von ursprünglich einer OH-Zahl von 40 zu 50 % umgesetzt, so daß nunmehr anstelle der Hälfte aller Hydroxylgruppen Acrylatreste stehen. Ein solches Produkt wird A 50 genannt.
Viskosität bei 50° C 114 Pa.s TG -5° C

Beispiele F2 und F3

In entsprechender Weise wie Beispiel F1 wird der Polyester nach Beispiel 2 mit 7,5 kg (Beispiel F2) und mit 17,5 kg (Beispiel F3) des Adduktes nach Beispiel IIa entsprechend Beispiel F1 umgesetzt.
In Beispiel F2 beträgt die Funktionalisierung 30 % der vorhandenen Hydroxylgruppe des Polyesters (Produkt A 30). Die Viskosität bei 50° C beträgt 192 Pa.s, TG -10° C.

Das Produkt von Beispiel F3 ist zu 70 % funktionalisiert (Produkt A 70). Die Viskosität bei 40° C beträgt 310 Pa.s, TG -4° C.

Beispiel F4

Nach der Verfahrensweise des Beispiels F1 wird der Polyester nach Beispiel 1 mit 12,5 kg des

Produktes nach Beispiel IIa je 100 kg des Polyesters zur Reaktion gebracht. Es entsteht ein Produkt mit einer 50 %igen Funktionalisierung der Hydroxylgruppen. Viskosität bei 50° C beträgt 35 Pa.s, TG -32° C.

Beispiel F5

Der Polyester nach Beispiel 3 wird entsprechend der Verfahrensweise des Beispiels F1 mit 12,5 kg des Adduktes nach Beispiel IIa zur Reaktion gebracht. Es entsteht ein funktionalisierter Polyester mit Viskosität bei 50° C von 88 Pa.s, TG -25° C.

Beispiel F6

Der Polyester nach Beispiel 2 wird auf 150° C unter Rühren erwärmt und mit 11,8 kg Phthalsäureanhydrid je 100kg des Polyesters versetzt. Nach 30 min. ist die Hydroxylzahl auf 17 mg KOH/g gesunken, während die Säurezahl 18 mg KOH/g erreicht. Darauf werden 9,1 kg Glycidylmethacrylat sowie 50 g Hydrochinon als Polymerisationsinhibitor zugesetzt und weitere 30 min. bei 150 bis 170° C unter Rühren umgesetzt. Das Produkt wird abgekühlt und abgefüllt. Die Säurezahl beträgt 2 mg KOH/g, die Viskosität bei 20° C beträgt 4.500 Pa.s, TG -10° C.

Beispiel F7

Der Polyester nach Beispiel 2 wird auf 150° C unter Rühren erwärmt. Pro 100 kg des Polyesters werden 4,6 kg Methylacrylamidoglykolat-methylether (MAGME) sowie 50 g p-Toluolsulfonsäure und 50 g Hydrochinon zugegeben und anschließend weitere 50 min. bei 150° C reagieren gelassen.
Es entsteht ein Polyester, dessen Hydroxylgruppen zu 50% acryliert sind.
Viskosität bei 20° C 4.300 Pa.s, TG -15° C.

Beispiel F8

Harzzusatz
Der funktionalisierte Polyester nach Beispiel F2 wird in Mengen von 800 Teilen mit 200 Teilen Polyvinylmethylether (Lutonal M 40 der Fa. BASF) bei 70° C in einem Kneter homogenisiert.
Soweit die Vernetzung mit UV-Strahlen ausgeführt wird, werden danach 1 % Darokur 1173 der Fa. Merk als Photoinitiator zugefügt.

Vernetzung zu Haftklebstoffen aus funktionalisierten Polyestern

V 1 - Elektronenstrahlvernetzung

Mittels einer Rakel wird auf ein Papier von 80 g/m$^2$ oder eine entsprechende Kunststofffolie einer der in den Beispielen F genannten funktionalisierten Polyestern bei 100° C mit einem Auftragsgewicht von 20 g/cm$^2$ aufgetragen und bei einer Strahlendosis von 3 Mrad mittels eines Elektronenstrahlers (Elektrocurtain Fa. Energy Sciences Int.) vernetzt.

V 2 - UV-Strahlenvernetzung

Die unter V1 genannte Auftragsweise und die dort genannten Polyester werden in gleicher Weise und bei gleichen Temperaturen verwendet, wobei stets als Photoinitiator 1 % Darocur 1173 (Fa. Merk) im funktionalisierten Polyester verteilt ist.
Die Vernetzung erfolgt durch eine Bestrahlungszeit von 0,5 sec. mittels eines UV-Strahlers, Hersteller: Fa. Theimer, mit Strahlungsleistung von 100 W/cm.
Es können auch Auftragstemperaturen von 50° C aufwärts gewählt werden, soweit die funktionalisierten

Polyester eine voranstehend genannte niedrige Viskosität aufweisen.

Die Eigenschaften der so erhaltenen Haftklebstoffe sind in der nachfolgenden Tabelle genannt.

TABELLE 2

| Polyester n. Beispielen | Acryl.-Grad | Vernet-zung | Schälkraft (N/2,5cm) | Scherstand-festigkeit | Quick-Stick (N/2,5 cm) | Kugelroll-Tack (cm) |
|---|---|---|---|---|---|---|
| 1 + F4 | 50 | UV | 4 | 10 min. | 2 | -- |
| 3 + F5 | 50 | UV | 20 | 2,5 h | 5 | 4 |
| 3 + F5 | 50 | EB | 10 | 2,0 h | 5 | 20 |
| 2 + F2 | 30 | EB | 18 | 9,0 h | 18 | 20 |
| 2 + F1 | 50 | UV | 19 | 45 min. | -- | 20 |
| 2 + F3 | 70 | UV | 4 | 2,0 h | -- | 20 |
| 2 + F8 | 30 | EB | 23 | 24,0 h | 20 | 20 |
| 2 + F7 | 50 | UV | 20 | 8,0 h | -- | 20 |
| 2 + F6 | 50 | UV | 12 | 2,0 h | -- | 20 |

**Ansprüche**

1. Bei Raumtemperatur flüssige Hydroxypolyester mit OH-Zahlen von 10 bis 100 aus zwei - und höherfunktionellen Ausgangsstoffen, dadurch gekennzeichnet, daß die Polyester linear sind und über Ester- und/oder Etherbindungen von Tricarbonsäuren oder höherfunktionellen Carbonsäuren und/oder Triolen oder höherfunktionellen Polyolen und/oder Hydroxydicarbonsäuren entlang der Hauptkette und an der dritten oder höheren Funktion gebundene geradkettige oder verzweigte Alkylseitenketten von 4 bis 36 C-Atomen tragen, wobei das Molverhältnis von Estersegmenten der Hauptkette zu Alkylseitenketten 1,0 zu 0,02 bis 2,0 beträgt, mit Glasumwandlungspunkten kleiner als 0 °C, vorzugsweise kleiner als -20 °C.

2. Polyester nach Anspruch 1 , dadurch gekennzeichnet, daß die kettenlänge der geradkettigen oder verzweigten Alkylseitenketten 4 bis 18 Kohlenstoffatome beträgt.

3. Polyester nach den Ansprüchen 1 oder 2, dadurch gekennzeichnet, daß die Alkylseitenketten als Reste von aliphatischen Monoalkoholen an die dritte oder höhere Funktion von Polycarbonsäuren gebunden sind.

4. Polyester nach Anspruch 3, dadurch gekennzeichnet, daß die Alkylseitenketten als Reste von aliphatischen Monoalkoholen an die dritte Carboxylgruppe von Tricarbonsäure-monoalkylestern gebunden sind.

5. Polyester nach den Ansprüchen 1 oder 2, dadurch gekennzeichnet, daß die Alkylseitenketten als Reste von aliphatischen Monocarbonsäuren in deren Partialestern von Polyolen gebunden sind.

6. Polyester nach Anspruch 5, dadurch gekennzeichnet, daß die Alkylseitenketten als Reste von aliphatischen Monocarbonsäuren in Glycidylmonoester oder Trimethylolpropanmonoester dieser Monocarbonsäuren gebunden sind.

7. Polyester nach den Ansprüchen 1 oder 2, dadurch gekennzeichnet, daß die Alkylseitenketten als Reste von aliphatischen Monoalkoholen in deren Partialethern von Polyolen gebunden sind.

8. Polyester nach Anspruch 7, dadurch gekennzeichnet, daß die alkylseitenketten als Reste von aliphatischen Monoalkoholen in Triol-monoethern dieser Monoalkohole gebunden sind.

9. Polyester nach den Ansprüchen 1 oder 2, dadurch gekennzeichnet, daß die Alkylseitenketten als Reste von Partialestern oder Partialethern aliphatischer Hydroxycarbonsäuren an deren dritte oder höhere Funktion gebunden sind.

10. Polyester nach Anspruch 9, dadurch gekennzeichnet, daß die Alkylseitenketten als Reste von Monoestern oder Monoethern von Monohydroxydicarbonsäuren oder Dihydroxymonocarbonsäuren gebunden sind.

11. Polyester nach einem der vorangehenden Ansprüche, mit einer breiten Verteilung des Molekulargewichts im Bereich zwischen 1 .000 bis 10.000, vorzugsweise 2.000 bis 5.000.

12. Polyester nach einem der vorangehenden Ansprüche, mit Hydroxylzahlen von 20 bis 50 mg KOH/g.

13. Verfahren zur Herstellung von linearen Polyestern mit OH-Zahlen von 10 bis 100 aus zwei- oder höherfunktionellen Ausgantsstoffen mit an deren dritter oder höheren Funktion gebundenen Alkylseitenketten, wobei im Überschuß bei der Polyesterbildung vorhandene Diole im Laufe der Polyesterbildung entfernt werden nach mindestens einem der Ansprüche 1 bis 12, dadurch gekennzeichnet,
daß als difunktionelle polyesterbildende Bestandteile aliphatische Diole und aliphatische, cycloaliphatische oder aromatische Dicarbonsäuren,
als trifunktionelle Bestandteile, Tri- oder Polycarbonsäuren, Tri- oder Polyole oder Hydroxycarbonsäuren, deren polyesterbildende Derivate
und Monoalkohole und/oder aliphatische Monocarbonsäuren als freie Verbindung oder als Ester bzw. Ether der trifunktionellen oder höherfunktionellen polyester : bildenden Bestandteile eingesetzt werden,

wobei mindestens je dritte oder höhere Carboxyl- oder Hydroxylfunktion der trifunktionellen oder höherfunktionellen polyesterbildenden Bestandteile ein oder mehr Mole Monoalkanol oder aliphatische Monocarbonsäure als freie Verbindung oder Ester bzw. Ether vorhanden sind und zu Polyestern umgesetzt werden.

**14.** Verfahren nach Anspruch 13, **dadurch gekennzeichnet,** daß die trifunktionellen Bestandteile als Monoalkylester von Tricarbonsäuren oder Glycidylmonocarbonsäureester eingesetzt werden.

**15.** Verfahren nach Anspruch 13, **dadurch gekennzeichnet,** daß Tricarbonsäuredialkyl- oder -trialkylester eingesetzt werden und die Monoalkanole bis auf eine Alkanolgruppe je Tricarbonsäure bei der Polyesterbildung abgespalten werden.

**16.** Verfahren nach Anspruch 13, **dadurch gekennzeichnet,** daß Monoalkanole und/oder aliphatische Monocarbonsäuren als freie Verbindung im Überschuß gegenüber den dritten und höheren Funktionen von polyesterbildenden Bestandteilen bei der Veresterung und Polyesterbildung vorhanden sind und der Überschuß am Ende der Polyesterbildung entfernt wird.

**17.** Verfahren nach einem der Ansprüche 13 bis 16, **dadurch gekennzeichnet,** daß die Kettenlänge der geradkettigen oder verzweigten Monoalkanole oder aliphatischen Monocarbonsäuren 4 bis 18 Kohlenstoffatome beträgt.

**18.** Verfahren nach einem der Ansprüche 13 bis 17, **dadurch gekennzeichnet,** daß die Monoalkanole und/oder aliphatischen Monocarbonsäuren vorzugsweise verzweigt sind und sehr bevorzugt 2-Ethylhexanol, ggf. tert.-Butanol, 2-Ethylhexansäure, Isooktansäure, Isononansäure oder $\alpha$, $\alpha$ -verzweigte gesättigte Monocarbonsäuren als freie Verbindungen oder als Ester bzw. Ether von tri- oder höher funktionellen polyesterbildenden Bestandteilen eingesetzt werden.

**19.** Verwendung der Polyester nach mindestens einem der vorangehenden Ansprüche in Beschichtungsmassen oder Klebstoffe, vorzugsweise in von Lösungsmitteln freier oder lösungsmittelarmer Form.

**20.** Verwendung nach Anspruch 19 als Klebstoffe zusammen mit Vernetzern oder nach Umsetzung mit vernetzbaren Verbindungen als Reaktivklebtoffe.

**21.** Verwendung nach Anspruch 19 als Haftklebstoffe mit nach Vernetzung verbleibender Klebkraft durch Umsetzung von 10 bis 90 % der Hydroxylgruppen mit Methacryl- oder Acrylverbindungen unter Bildung von (Meth-) acrylendgruppen und anschließender Vernetzung der (Meth-)acrylgruppen durch UV- oder ES-Strahlen.

## Claims

**1.** Hydroxypolyesters which are liquid at room temperature, have OH numbers of 10 to 100 and are formed from bi- and higher functional starting materials, characterised in that the polyesters are linear and carry straight chain or branched alkyl side chains of 4 - 36 C-atoms connected via ester and/or ether connections along the main chain and at third or higher function of tricarboxylic acids or higher functional carboxylic acids and/or triols or higher functional polyols and/or hydroxydicarboxylic acids, with the molar ratio of ester segments of the main chain to alkyl side chains amounting to 1.0 : 0.02 to 2.0, the hydroxypolyesters having glass transition points less then 0 °C, preferably less than - 20 °C.

**2.** Polyesters according to claim 1, characterised in that the chain length of the straight chain or branched alkyl side chains amounts to 4 to 18 carbon atoms.

**3.** Polyesters according to claims 1 or 2, characterised in that the alkyl side chains are connected as aliphatic mono-alcohol residues to the third or higher polycarboxylic acid function.

**4.** Polyesters according to claim 1 or 2, characterised in that the alkyl side chains are connected as aliphatic monoalcohol residues to the third carboxyl group of tricarboxylic acid monoalkyl esters.

5. Polyesters according to claims 1 or 2, characterised in that the alkyl side chains are connected as aliphatic monocarboxylic acid residues in polyol partial esters thereof.

6. Polyesters according to claim 5, characterised in that the alkyl side chains are connected as aliphatic monocarboxylic acid residues in glycidyl monoesters or trimethylolpropane monoesters of these monocarboxylic acids.

7. Polyesters according to claims 1 or 2, characterised in that the alkyl side chains are connected as aliphatic monoalcohol residues in polyol partial ethers thereof.

8. Polyesters according to claim 7, characterised in that the alkyl side chains are connected as aliphatic monoalcohol residues in triol monoethers of these monoalcohols.

9. Polyesters according to claims 1 or 2 characterised in that the alkyl side chains are connected as partial ester or partial ether residues of aliphatic hydroxycarboxylic acids at the third or higher function thereof.

10. Polyesters according to claim 9, characterised in that the alkyl side chains are connected as residues of monoesters or monoethers of monohydroxydicarboxylic acids or dihydroxycarboxylic acids.

11. Polyesters according to one of the foregoing claims, with a wide distribution of molecular weight in the range between 1,000 to 10,000, preferably 2,000 to 5,000.

12. Polyesters according to one of the foregoing claims, with hydroxyl numbers of 20 to 50 mg KOH/g.

13. Process for the production of linear polyesters with OH numbers of 10 to 100 from bi- or higher functional starting materials, the polyesters having alkyl side chains connected at third or higher function thereof, wherein diols present in excess in the polyester formation being removed in the course of polyester formation, the polyester being according to at least one of claims 1 to 12, characterised in that aliphatic diols and aliphatic, cycloaliphatic or aromatic dicarboxylic acids, as difunctional polyester forming constituents, tri-or polycarboxylic acids, tri-or polyols or hydroxycarboxylic acids, polyester forming derivatives thereof, as trifunctional constituents and mono-alcohols and/or aliphatic monocarboxylic acids as free compound or as ester or ether respectively of the trifunctional or higher functional polyester forming constituents, are employed with at least one or more moles of monoalkanol or aliphatic monocarboxylic acid being present as free compound or ester or ether per third or higher carboxyl or hydroxyl function of the tri-functional or higher functional polyester forming constituents and being reacted to form polyesters.

14. Process according to claim 13, characterised in that the trifunctional constituents are employed as monoalkyl esters of tricarboxylic acids or as glycidyl monocarboxylic acids.

15. Process according to claim 13, characterised in that tricarboxylic acid dialkyl or trialkyl esters are employed and the mono-alkanols are split off as far as to one alkanol group per tricarboxylic acid in the ester formation.

16. Process according to claim 13 characterised in that mono-alkanols and/or aliphatic mono-carboxylic acids are present as free compound in excess with respect to the third and higher functions of polyester-forming constituents in the esterification and polyester formation, and the excess is removed at the end of the polyester formation.

17. Process according to one of claims 13 to 16, characterised in that the chain length of the straight chain or branched monoalkanols or aliphatic monocarboxylic acids amounts to 4 to 18 carbon atoms.

18. Process according to one of claims 13 to 17, characterised in that the mono-alkanols and/or aliphatic mono-carboxylic acids are preferably branched and very preferably 2-ethylhexanol, and, if the occasion arises, tert.-butanol, 2-ethylhexanoic acid, iso-octanoic acid, isononanoic acid or $\alpha,\alpha$-branched saturated mono-carboxylic acids are employed as free compounds or as esters or ethers of tri or higher functional polyester-forming constituents.

19. Use of the polyesters according to at least one of the foregoing claims in coating materials or adhesives, preferably in a form free of solvents or in low solvent form.

20. Use as adhesives according to claim 19 together with crosslinkers or, after reaction with crosslinkable compounds, as reactive adhesives.

21. Use according to claim 19 as adhesive substances with adhesive strength remaining after cross linking as a result of reaction of 10 to 90% of hydroxyl groups with methacrylic or acrylic compounds with formation of (meth-) acrylic end groups and subsequent crosslinking of the (meth-) acrylic groups by UV or electron beams.

## Revendications

1. Hydroxy-polyesters fluides à la température ambiante, à indices d'OH de 10 à 100, obtenus à partir de produits de départ bifonctionnels ou à plus grand nombre de fonctions, caractérisés en ce que les polyesters sont linéaires et portent des chaînes latérales alkyle droites ou ramifiées de 4 à 36 atomes de carbone, liées par des liaisons ester et/ou éther d'acides tricarboxyliques ou d'acides carboxyliques à plus grand nombre de fonctions et/ou de triols ou de polyols à plus grand nombre de fonctions et/ou d'acides hydroxydicarboxyliques le long de la chaîne principale et à la troisième fonction ou fonction plus élevée, le rapport molaire des fragments ester de la chaîne principale aux chaînes latérales alkyle allant de 1,0:0,02 à 2,0, avec des points de transition vitreuse inférieurs à 0 °C, de préférence inférieurs à -20 °C.

2. Polyesters selon la revendication 1, caractérisés en ce que la longueur de chaîne des chaînes latérales alkyle droites ou ramifiées est de 4 à 18 atomes de carbone.

3. Polyesters selon la revendication 1 ou 2, caractérisés en ce que les chaînes latérales alkyle sont liées, en tant que restes de monoalcools aliphatiques, à la troisième fonction ou fonction plus élevée d'acides polycarboxyliques.

4. Polyesters selon la revendication 3, caractérisés en ce que les chaînes latérales alkyle sont liées, en tant que restes de monoalcools aliphatiques, au troisième groupe carboxy d'esters monoalkyliques d'acides tricarboxyliques.

5. Polyesters selon la revendication 1 ou 2, caractérisés en ce que les chaînes latérales alkyle sont liées, en tant que restes d'acides monocarboxyliques aliphatiques, dans les esters partiels de ceux-ci avec des polyols.

6. Polyesters selon la revendication 5, caractérisés en ce que les chaînes latérales alkyle sont liées, en tant que restes d'acides monocarboxyliques aliphatiques, dans des monoesters glycidyliques ou monoesters de triméthylolpropane de ces acides monocarboxyliques.

7. Polyesters selon la revendication 1 ou 2, caractérisés en ce que les chaînes latérales alkyle sont liées, en tant que restes de monoalcools aliphatiques, dans des éthers partiels de ceux-ci avec des polyols.

8. Polyesters selon la revendication 7, caractérisés en ce que les chaînes latérales alkyle sont liées, en tant que restes de monoalcools aliphatiques, dans des monoéthers de triols de ces monoalcools.

9. Polyesters selon la revendication 1 ou 2, caractérisés en ce que les chaînes latérales alkyle sont liées, en tant que restes d'esters partiels ou d'éthers partiels d'acides hydroxycarboxyliques aliphatiques, à la troisième fonction ou fonction plus élevée de ceux-ci.

10. Polyesters selon la revendication 9, caractérisés en ce que les chaînes latérales alkyle sont liées, en tant que restes de monoesters ou de monoéthers d'acides monohydroxydicarboxyliques ou d'acides dihydroxymonocarboxyliques.

11. Polyesters selon l'une des revendications précédentes, ayant une large distribution de la masse

moléculaire, dans la plage comprise entre 1 000 et 10 000, de préférence 2 000 et 5 000.

**12.** Polyesters selon l'une des revendications précédentes, ayant des indices d'hydroxyle de 20 à 50 mg de KOH/g.

**13.** Procédé pour la préparation de polyesters linéaires à indices d'OH de 10 à 100, à partir de produits de départ bifonctionnels ou à plus grand nombre de fonctions, comportant des chaînes latérales alkyle liées à leur troisième fonction ou fonction plus élevée, des diols présents en excès lors de la formation des polyesters étant éliminés au cours de la formation des polyesters, selon au moins l'une des revendications 1 à 12, caractérisé en ce que l'on utilise:
- en tant que composants bifonctionnels générateurs de polyesters, des diols aliphatiques et des acides dicarboxyliques aliphatiques, cycloaliphatiques ou aromatiques,
- en tant que composants trifonctionnels, des acides tri- ou polycarboxyliques, des tri- ou polyols ou des acides hydroxycarboxyliques, leurs dérivés générateurs de polyesters
- et des monoalcools et/ou acides monocarboxyliques aliphatiques sous forme de composé libre ou d'esters ou respectivement d'éthers des composants trifonctionnels ou à plus grand nombre de fonctions, générateurs de polyesters,
- une ou plusieurs moles de monoalcanol ou d'acide monocarboxylique aliphatique sous forme de composé libre ou d'ester , ou respectivement d'éther , étant présente(s) et convertie(s) en polyesters pour au moins chaque troisième fonction carboxy ou hydroxyle ou fonction carboxy ou hydroxyle plus élevée des composants trifonctionnels ou à plus grand nombre de fonctions, générateurs de polyesters.

**14.** Procédé selon la revendication 13, caractérisé en ce que l'on utilise les composants trifonctionnels sous forme d'esters monoalkyliques d'acides tricarboxyliques ou d'esters glycidyliques d'acides monocarboxyliques.

**15.** Procédé selon la revendication 13, caractérisé en ce que l'on utilise des esters dialkyliques ou trialkyliques d'acides tricarboxyliques et on élimine lors de la formation des polyesters les monoalcools jusqu'à un groupe alcanol par acide tricarboxylique.

**16.** Procédé selon la revendication 13, caractérisé en ce que lors de l'estérification et de la formation des polyesters, des monoalcools et/ou des acides monocarboxyliques aliphatiques sont présents sous forme de composé libre en excès par rapport aux troisièmes fonctions et fonctions plus élevées de composants générateurs de polyesters, et l'excès est éliminé à la fin de la formation des polyesters.

**17.** Procédé selon l'une des revendications 13 à 16, caractérisé en ce que la longueur de chaîne des monoalcools ou acides monocarboxyliques aliphatiques, à chaînes droites ou ramifiées est de 4 à 18 atomes de carbone.

**18.** Procédé selon l'une des revendications 13 à 17, caractérisé en ce que les monoalcools et/ou acides monocarboxyliques aliphatiques sont de préférence ramifiés et on utilise de façon particulièrement préférée le 2-éthylhexanol, éventuellement le tert-butanol, l'acide 2-éthylhexanoïque, l'acide isooctanoïque, l'acide isononanoïque ou des acides monocarboxyliques saturés $\alpha,\alpha$-ramifiés, sous forme de composés libres ou d'esters, ou respectivement d'éthers, de composants trifonctionnels ou à plus grand nombre de fonctions, générateurs de polyesters.

**19.** Utilisation des polyesters selon au moins l'une des revendications précédentes, dans des matières de revêtements ou des adhésifs, de préférence sous forme exempte de solvants ou pauvre en solvants.

**20.** Utilisation selon la revendication 19 en tant qu'adhésifs, conjointement avec des agents de réticulation ou, après réaction avec des composés réticulables, en tant qu'adhésifs réactifs.

**21.** Utilisation selon la revendication 19 en tant qu'adhésifs de contact à adhésivité permanente après réticulation, par réaction de 10 à 90 % des groupes hydroxyle avec des composés acryliques ou méthacryliques, avec formation de groupes terminaux (méth-)acryliques et réticulation subséquente des groupes (méth-)acryliques sous l'effet de rayons UV ou de faisceaux d'électrons.